# EUROPÄISCHE PATENTANMELDUNG

(11) **EP 1 754 648 A2**
(43) Veröffentlichungstag der Anmeldung: **21.02.2007**
(21) Anmeldenummer: 06116208.7
(22) Anmeldetag: 28.06.2006
(51) Int. Cl.: B62D 5/04

(54) **Überlagerungslenkung**

(30) Priorität: 16.08.2005 DE 102005038695
(71) Anmelder: ZF Lenksysteme GmbH, 73527 Schwäbisch Gmünd (DE)
(72) Erfinder: Brenner, Peter, 73563, Mögglingen (DE)

(57) **Zusammenfassung**

Überlagerungslenkung (1) für ein Fahrzeug, mit einem Überlagerungsgetriebe (2) zur Verknüpfung eines von einem Fahrer auf ein erstes Getriebeeingangsglied (3) des Überlagerungsgetriebes (2) eingegebenen Lenkwinkels (σₛ) mit einem, auf ein zweites Getriebeeingangsglied (4) eingegebenen Winkel (σ_{A}) zu einem Summenwinkel (σ_{V}) an einem Ausgangsglied (5) des Überlagerungsgetriebes (2).
Um eine Überlagerungslenkung zu schaffen, die kostengünstig und in Bezug auf ihre Komponenten Variabilität ermöglicht, ist vorgesehen, den Summenwinkel (σ_{V}) an dem Ausgangsglied (5) des Überlagerungsgetriebes (1) von einem Index-Sensor (6) zu detektieren.

## Beschreibung

Die Erfindung betrifft eine Überlagerungslenkung für ein Fahrzeug nach dem Oberbegriff des Anspruchs 1.

Die DE 10 2004 046 535 A1 beschreibt eine Überlagerungslenkung für ein Fahrzeug mit einem Überlagerungsgetriebe, das eine Drehbewegung an einem als Lenkwelle ausgebildeten ersten Getriebeeingangsglied mit einer Drehbewegung oder einem Winkel, der von einem Servomotor auf ein zweites Getriebeeingangsglied aufge-

bracht wird, verknüpft oder überlagert

Das Überlagerungsglied weist ein Ausgangsglied auf, das mit dem Summenwinkel, bestehend aus dem Drehwinkel des ersten und zweiten Getriebeeingangsglieds, rotiert.

Das Ausgangsglied ist Eingangsglied für ein Lenkgetriebe, welches die Drehbe-wegung des Ausgangsgliedes des Überlagerungsgetriebes in eine Translations-bewegung von Spurstangen umwandelt. Die Spurstangen dienen in Verbindung mit Radlenkhebeln in an sich bekannter Weise zur Lenkwinkelverstellung gelenkter Räder des Fahrzeuges.

Die Drehbewegung des Ausgangsgliedes des Überlagerungsgetriebes wird von einem Sensor gemessen und von einer Steuerungs- und/oder Regelungseinrichtung erfasst. Die Steuerungs- und/oder Regelungseinrichtung steuert wiederum den Servo-motor.

Die bekannten Überlagerungslenkungen weisen Sensoren zur Messung des Summenwinkels an dem Ausgangsglied des Überlagerungsgetriebes auf, die an dem Lenkgetriebe angeordnet sind und es besteht zum einen eine geringe Flexibilität in Bezug auf den Ort des Sensors und zum anderen sind die Sensoren bauartbedingt teuer.

Der Erfindung liegt die Aufgabe zugrunde, eine Überlagerungslenkung zu schaffen, die kostengünstig und in Bezug auf die Anordnung ihrer Komponenten Variabilität ermöglicht.

Die Aufgabe wird mit einer Überlagerungslenkung mit den Merkmalen des Anspruchs 1 gelöst.

Dadurch dass der Sensor für die Detektion des Summenwinkels an dem Ausgangs-glied des Überlagerungsgetriebes als kostengünstiger Index-Sensor ausgebildet ist und bevorzugt an dem Überlagerungsgetriebe angeordnet ist, ist eine Überlagerungs-lenkung geschaffen, die einen sicheren Betrieb bevorzugt in Verbindung mit einem Lenkwinkelsensor und einem Sensor für die Detektion des Drehwinkels des zweiten Getriebeeingangsglieds ermöglicht.

Ein Index-Sensor vermag ein Signal zu erzeugen, das abhängig ist von der Stellung des Ausgangsgliedes des Überlagerungsgetriebes. Ein derartiger Sensor kann beispielsweise einen kurzen Impuls erzeugen, wenn das Ausgangsglied über die Indexposition dreht und ein Null-Signal in allen anderen Stellungen des Ausgangs-gliedes. Es können bei der Anordnung mehrerer Index-Marken an dem Ausgangsglied auch mehrere Index-Impulse generiert werden.

Bevorzugte Ansprüche ergeben sich aus den Unteransprüchen.

Es ist zweckmäßig, eine besonders häufig von dem Ausgangsglied des Über-lagerungsgetriebes eingenommene Stellung - eine Mittellage - genau und permanent erfassen zu können. Daher empfiehlt sich die Anordnung einer Index-Marke zur Er-zeugung eines Signals an dem Index-Sensor so, dass eine genaue Neutralstellung oder Mittellage des Ausgangsgliedes des Überlagerungsgetriebes detektierbar ist. Die Mittellage des Ausgangsgliedes entspricht der Geradeausfahrt des Fahrzeugs.

Werden um den Umfang des Ausgangsgliedes, das als Welle oder Wellenstummel gebildet ist, mehrere Index-Marken in verschiedenem Abstand zueinander oder mit verschiedener tangentialer Ausdehnung angeordnet, so ist eine eindeutige Erfassung des Drehwinkels des Ausgangsgliedes um 360° ermöglicht.

Die Index-Marken können optische Marken in Form von Zähnen, Kerben, Lochungen und dergleichen sein. Es kann auch zweckmäßig sein solche Marken als feldver-ändernde Marken, die ein magnetisches oder elektromagnetisches Feld um einen mit einem Hilfsfeld versehenen Sensor verändern, auszubilden. Es kann auch zweckmäßig sein die Index-Marken als felderzeugende Marken, die induktiv elektromagnetische Felder erzeugen oder Magnetfelder erzeugen, auszubilden.

In Abhängigkeit von der Art der Index-Marken kann es zweckmäßig sein bei felderzeugenden oder feldverändernden Index-Marken den Index-Sensor als Hallsensor oder als Hallsensor mit einem magnetischen Hilfsfeld auszubilden. Feldverändernde Index-Marken, wie Kerben oder Zähne an dem Ausgangsglied des Überlagerungsgetriebes, eignen sich in Kombination mit einem Hallsensor mit magnetischem Hilfsfeld.

Um Redundanz für den Ausfall des Index-Sensors zu schaffen weist die Über-lagerungslenkung in einem bevorzugten Ausführungsbeispiel einen Sensor zur Messung des von dem Fahrer in das Überlagerungsgetriebe eingegebenen Lenk-winkels auf. Zudem ist ein Sensor zur Messung des auf das zweite Getriebeein-gangsglied, wie etwa eine Servomotorwelle, aufgegebenen Drehwinkels vorgesehen. Wenigstens einer der Sensoren kann ein Absolutwinkelpositionssensor, der kein zyklisches, sich nach einer 360°-Drehung wiederholendes Signal erzeugt, sein. Eine Steuer- und/oder Regelungseinrichtung verknüpft die Signale der Sensoren so, dass der Summenwinkel an dem Ausgangsglied des Überlagerungsgetriebes bestimmt ist.

Die Steuer- und/oder Regelungseinrichtung kann auch zweckmäßigerweise die jeweilige Drehzahl von Rädern des Fahrzeugs erfassen, die bevorzugt gelenkt sind, und zusammen mit dem, einem 360°-Zyklus folgenden Signal des Index-Sensors, einen Absolutwinkel des Ausgangsglieds des Überlagerungsgetriebes und damit auch einen absoluten, tatsächlichen, aktuellen Lenkwinkel der Überlagerungslenkung bestimmen.

Ein Ausführungsbeispiel der Erfindung ist nachfolgend anhand der Zeichnung gezeigt. In der Zeichnung zeigt:

Fig. 1 eine schematische Ansicht einer erfindungsgemäßen Überlagerungslenkung,

Fig. 2 einen schematischen Querschnitt durch das Ausgangsglied des Überlagerungsgetriebes entlang der Linie II - II in Fig. 1,

Fig. 3 einen Signalverlauf des Index-Sensors der Überlagerungslenkung in Fig. 1,

Fig. 4 einen weiteren Signalverlauf des Index-Sensors der Überlagerungslenkung in Fig. 1.

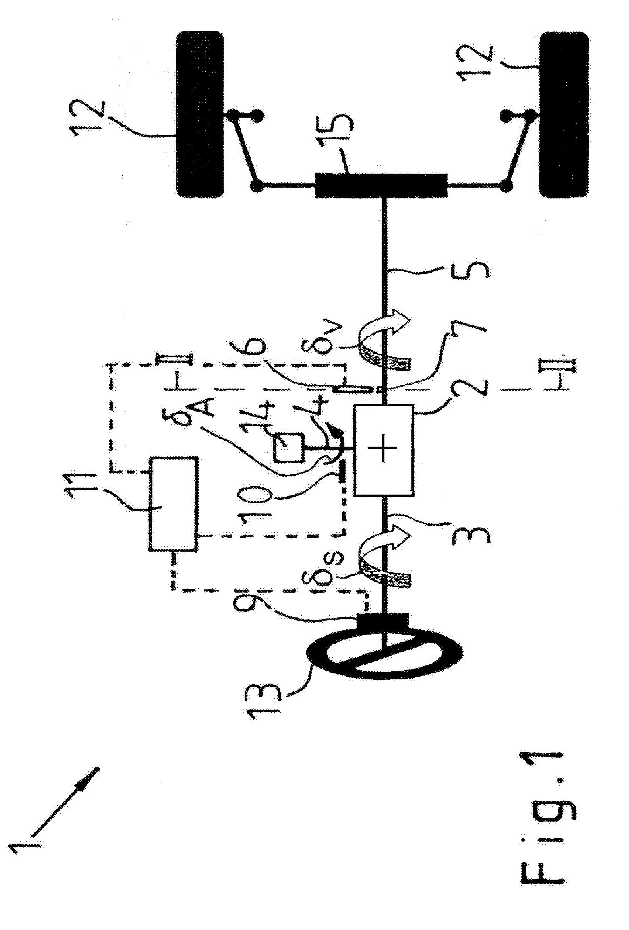

In Fig. 1 ist in einer schematischen Ansicht eine Überlagerungslenkung 1 für ein Fahrzeug gezeigt. Die Überlagerungslenkung 1 ist als elektrische Überlagerungs-lenkung aus einem Überlagerungsgetriebe 2 gebildet, das ein erstes Getriebe-eingangsglied 3 und ein zweites Getriebeeingangsglied 4 aufweist. Das erste Getriebeeingansglied 3 ist drehfest mit einer als Lenkrad 13 ausgebildeten Lenk-handhabe verbunden und das zweite Getriebeeingangsglied 4 ist drehfest mit einer Welle eines Servomotors 14 verbunden. Der Servomotor 14 stellt einen zusätzlichen Winkel σ_{A,}, der mit dem von der Lenkhandhabe auf das erste Getriebeeingangsglied 3 aufgebrachten Lenkwinkel σ_{S} additiv verknüpft wird, bereit.

Der Summenwinkel σ_{V} wird von dem Überlagerungsgetriebe 2 auf ein Ausgangs-glied 5 aufgeprägt. Das Überlagerungsgetriebe 2 kann als Wellgetriebe, als Planetenradgetriebe oder als Hohlradpaarsystem - etwa als IKONA-Getriebe - ausgebildet sein. Der auf das zweite Getriebeeingangsglied 4 aufgegebene Winkel σ_{A} wird von einer Steuerungs- und/oder Regelungseinrichtung 11, die fahrzeugseitig oder lenkungsseitig vorgesehen sein kann, von Fahrt- und Fahrzeugparametern abhängig gesteuert.

Der Summenwinkel σ_{V}, der auf das Ausgangsglied 5 des Überlagerungsgetriebes 1 aufgeprägt ist, wird auf ein Eingangsglied eines Lenkgetriebes 15, etwa auf ein Ritzel, aufgebracht. Das Lenkgetriebe 15 dient in an sich bekannter Weise zur Lenkwinkel-verstellung gelenkter Räder 12 über Spurstangenhebel und Radlenkhebel des Fahrzeugs.

Die Überlagerungslenkung 1 weist drei Sensoren oder Sensorarrays auf um den Drehwinkel σ_{S} des ersten Getriebeeingangsglieds 3 (Sensor 9) zu bestimmen, um den Drehwinkel σ_{A} des zweiten Getriebeeingangsgliedes 4 (Sensor 10) zu bestimmen und um den Summenwinkel σ_{V} an dem Ausgangsglied 5 des Überlagerungsgetriebes 2 zu bestimmen (Sensor 6). Der Sensor 6 zur Bestimmung des Summenwinkels σ_{V} ist als Index-Sensor ausgeführt, während die Sensoren 9, 10 zur Bestimmung des Drehwinkels σ_{S}, σ_{A} der ersten und zweiten Getriebeeingangsglieder 3, 4 als Absolut-winkelpositionssensoren ausgebildet sind, die zwar wie der Index-Sensor 6, ein winkelstellungsabhängiges, zyklisches Ausgangssignal erzeugen, das Ausgangs-signal der Sensoren 9, 10 aber ist in der Lage innerhalb einer vollständigen Umdrehung der Getriebeeingangsglieder 3, 4 ein Signal anzugeben, das sich bevorzugt im wesentlichen linear ändert.

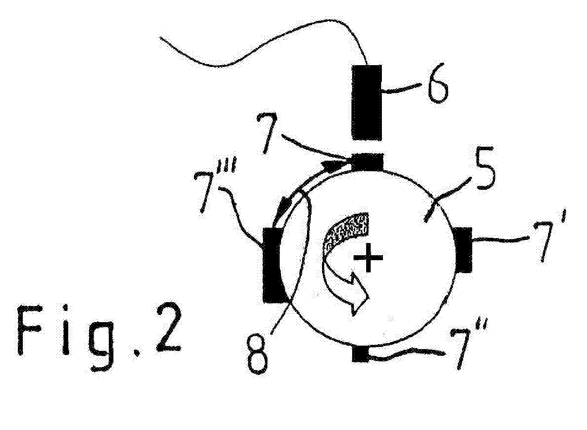

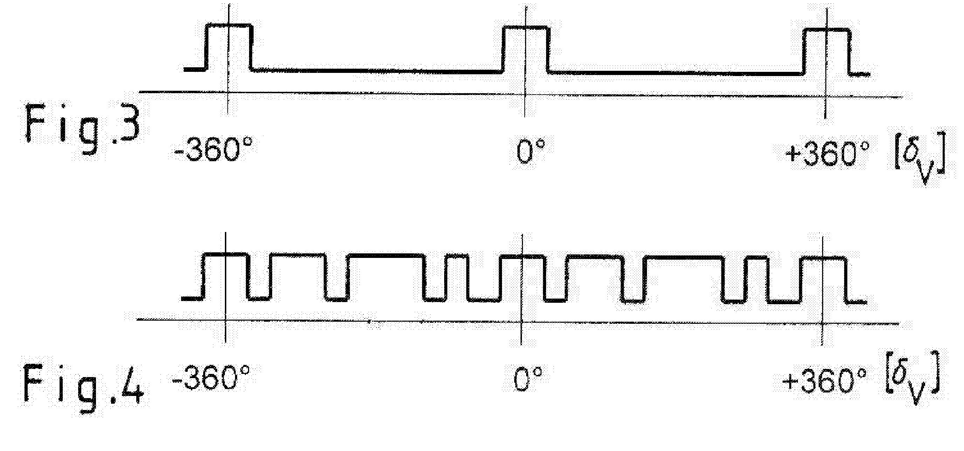

Der Index-Sensor 6 erzeugt hingegen, wie Fig. 3 zeigt, ein Ausgangssignal das abhängig von einem Winkel σ_{V} ist, der die Stellung des Ausgangsgliedes 5 innerhalb eines Bruchteils einer Umdrehung des Ausgangsgliedes 5 angibt. Der Index-Sensor 6 erzeugt beispielsweise einen kurzen Impuls, wenn das Ausgangsglied 5 des Über-lagerungsgetriebes 2 sich über eine von einer Index-Marke 7 (vgl. Fig. 2) definierten Position des Ausgangsgliedes 5 hinausdreht. Die Index-Marke 7 definiert hier eine Mittellage des Ausgangsgliedes 5 und eine Geradeausfahrt-Position der gelenkten Räder 12 des Fahrzeugs.

Die Sensoren 9, 10 für die Bestimmung des Drehwinkels des ersten und zweiten Getriebeeingangsglieds 3, 4 messen ohne ein zwischengeschaltetes Getriebe die Umdrehungen der betreffenden Getriebeglieder 3, 4. Es kann auch zweckmäßig sein, die Messung der Drehwinkel des ersten und zweiten Getriebeeingangsgliedes 3, 4 durch Zwischenschalten von Getrieben mit insbesondere nicht ganzzahligen Über-setzungsverhältnissen zwischen das jeweilige Getriebeeingangsglied 3, 4 und dem jeweiligen Sensor 9, 10 vorzunehmen. Es ergibt sich dabei ein asynchroner Verlauf der Sensorsignale aller drei Sensoren 6, 9, 10, der geeignet ist die Absolutposition des Augangsgliedes 5 über die mit den Sensoren 6, 9, 10 vernetzte Steuer- und/oder Regelungseinrichtung 11 zu bestimmen.

Um die Auflösegenauigkeit zu erhöhen sind, wie Fig. 2 zeigt, mehrere Index-Marken 7,7',7",7"'um den Umfang des Ausgangsgliedes 5 angeordnet. Die Index-Marken 7, 7',7'',7''' haben einen unterschiedlichen tangentialen Abstand 8 zueinander und zudem eine unterschiedliche tangentiale Ausdehnung, wodurch sich eine signifikante Kodierung ihrer Signale, wie Fig. 4 zeigt, über einen Drehwinkel σ_{V} von 360° bei dem Ausgangsglied 5 erzielen lässt.

Die in dem Ausführungsbeispiel gezeigten Index-Marken 7, 7', 7", 7''' sind feldver-ändernde Marken, die als Zähne um das Ausgangsglied 5 gebildet sind und die ein magnetisches Hilfsfeld des als vorgespannten Hall-Sensor ausgebildeten Index-Sensor 6 verändern. Diese Kodierung lässt sich auch durch die Verknüpfung des Drehwinkels σ_{S} an dem ersten Getriebeeingangsglied 3 und dem Drehwinkel σ_{A} an dem zweiten Getriebeeingangsglied 4 durch die Steuer- und/oder Regelungsein-richtung 11 berechnen und für Plausibilitätsprüfungen des Index-Sensors 6 oder zur Berechnung des Summenwinkels σ_{V} bei Ausfall des Index-Sensors 6 heranziehen. Zudem ist damit eine Erkennung des Summenwinkels σ_{V}, auch ohne dass die Index-Marke 7 des Ausgangsgliedes 5 die Mittellage überschritten hat, möglich.

## Patentansprüche

1. Überlagerungslenkung für ein Fahrzeug, mit einem Überlagerungsgetriebe (2) zur Verknüpfung eines von einem Fahrer auf ein erstes Getriebeeingangsglied (3) des Überlagerungsgetriebes (2) eingegebenen Lenkwinkels (σ_{S}) mit einem auf ein zweites Getriebeeingangsglied (4) eingegebenen Winkel (σ_{A}) zu einem Summenwinkel (σ_{V}) an einem Ausgangsglied (5) des Überlagerungsgetriebes (2) **dadurch gekennzeichnet, dass** der Summenwinkel (σ_{V}) an dem Ausgangsglied (5) des Überlagerungsgetriebes (2) von einem Index-Sensor (6)
detektiert ist.

2. Überlagerungslenkung nach Anspruch 1, **dadurch gekennzeichnet, dass** eine Index-Marke (7) an dem Ausgangsglied (5) des Überlagerungsgetriebes (2) so angeordnet ist, dass ein Index-Impuls an dem Index-Sensor (6) um eine Mittellage des Ausgangsgliedes (5) ausgelöst wird.

3. Überlagerungslenkung nach Anspruch 2, **dadurch gekennzeichnet, dass** die Mittellage des Ausgangsgliedes (5) einer Geradeausfahrt des Fahrzeugs ent-spricht.

4. Überlagerungslenkung nach einem der Ansprüche 1 bis 3, **dadurch gekennzeichnet, dass** um das Ausgangsglied (5) des Überlagerungsgetriebes (2) mehrere Index-Marken (7,7',7",7"') angeordnet sind.

5. Überlagerungslenkung nach Anspruch 4, **dadurch gekennzeichnet, dass** sich die Index-Marken (7,7',7'',7''') voneinander unterscheiden.

6. Überlagerungslenkung nach einem der Ansprüche 4 oder 5, **dadurch gekennzeichnet, dass** die Index-Marken (7,7',7'',7''') verschiedene tangentiale Ausdehnung um das Ausgangsglied (5) des Überlagerungsgetriebes (2) aufweisen.

7. Überlagerungslenkung nach einem der Ansprüche 4 bis 6, **dadurch gekennzeichnet, dass** die Index-Marken (7,7',7",7''') unterschiedliche Abstände (8) zumindest in tangentialer Richtung des Ausgangsgliedes (5) haben.

8. Überlagerungslenkung nach einem der Ansprüche 1 bis 7, **dadurch gekenn-zeichnet, dass** die Index-Marken (7,7',7'',7''') optische oder felderzeugende oder feldverändernde Marken sind.

9. Überlagerungslenkung nach einem der Ansprüche 1 bis 8, **dadurch gekennzeichnet, dass** der Index-Sensor (6) ein Hall-Sensor oder ein unter einem magnetischen Hilfsfeld stehender Hall-Sensor oder magnetoresistiver Sensor ist.

10. Überlagerungslenkung nach einem der Ansprüche 1 bis 9, **dadurch gekennzeichnet, dass** die Überlagerungslenkung (1) einen Sensor (9) zur Messung des von dem Fahrer in das Überlagerungsgetriebe (2) eingegebenen Lenkwinkels (σ_{S}) und einen Sensor (10) zur Messung des auf das zweite Getriebeeingangsglied (4) eingegebenen Winkels (σ_{A}) aufweist, und die Signale der Sensoren (9, 10) durch eine Steuer- und/oder Regelungseinrichtung (11) so verknüpft sind, dass der Summenwinkel (σ_{V}) bestimmt ist.

11. Überlagerungslenkung nach Anspruch 10, **dadurch gekennzeichnet, dass** durch die Steuer- und/oder Regelungseinrichtung (11) zumindest die Drehzahl von zwei Rädern (12) einer Achse des Fahrzeugs ermittelt ist und mit dem von dem Index-Sensor (6) gemessenen Summenwinkel (σ_{V}) so verknüpft ist, dass die absolute Winkellage an dem Ausgangsglied (5) des Überlagerungsgetriebes (2) ermittelt ist.

12. Überlagerungslenkung nach einem der Ansprüche 1 bis 11, **dadurch gekenn-zeichnet, dass** die Überlagerungslenkung (1) als hydraulische, elektrohydrau-lische oder elektrische Servolenkung ausgeführt ist.
